(19) Europäisches Patentamt
European Patent Office
Office européen des brevets

(11) **EP 1 665 547 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(21) Anmeldenummer: **04766646.6**

(22) Anmeldetag: **31.08.2004**

(51) Int Cl.:
***H04Q 7/30*** *(2006.01)*

(86) Internationale Anmeldenummer:
**PCT/EP2004/051964**

(87) Internationale Veröffentlichungsnummer:
**WO 2005/029713 (31.03.2005 Gazette 2005/13)**

(54) **Vorrichtung für eine Funkstation für mehrere unterschiedliche Funkstandards**

Device for a radio station for multiple different radio standards

Dispositif destiné à une station radio pour standards différents multiples de radio

(84) Benannte Vertragsstaaten:
**AT BE BG CH CY CZ DE DK EE ES FI FR GB GR HU IE IT LI LU MC NL PL PT RO SE SI SK TR**

(30) Priorität: **24.09.2003 DE 10344278**

(43) Veröffentlichungstag der Anmeldung:
**07.06.2006 Patentblatt 2006/23**

(73) Patentinhaber: **Nokia Siemens Networks GmbH & Co. KG**
**81541 München (DE)**

(72) Erfinder:
• **GOEDECKE, Simon**
**81379 München (DE)**
• **HASSLER, Bernd**
**89171 Illerkirchberg (DE)**
• **SPLETT, Armin**
**89081 Ulm (DE)**

(56) Entgegenhaltungen:
**EP-A- 1 330 076     WO-A-98/27748**
**US-B1- 6 580 924**

• **PATENT ABSTRACTS OF JAPAN Bd. 2000, Nr. 16, 8. Mai 2001 (2001-05-08) & JP 2001 016184 A (NEC CORP), 19. Januar 2001 (2001-01-19)**

**Beschreibung**

Die Erfindung betrifft eine Vorrichtung für eine Funkstation zum Verarbeiten von ersten Basisbanddaten für einen ersten Funkstandard und von zweiten Basisbanddaten für einen zweiten Funkstandard sowie eine entsprechende Funkstation.

In Funkkommunikationssystemen verwendete Basisstationen benötigen im Allgemeinen eine Schnittstelle zwischen einer Basisbandverarbeitung und einer Sende- und Empfangseinheit, die von der Basisbandverarbeitung gelieferte Basisbanddaten auf Trägerfrequenzen aufmoduliert und an Teilnehmerstationen sendet. Überträgt die Basisstation Daten gemäß unterschiedlicher Funkstandards so wird für jeden Standard jeweils eine Schnittstelle zwischen der jeweiligen Basisbandverarbeitung und einer Sende- und Empfangseinheit benötigt. Für jeden Funkstandard wird somit eine Datenleitung zwischen Basisbandverarbeitung und Sende- und Empfangseinheit benötigt. Dies erfordert insbesondere bei einer räumlich separaten Anordnung von Basisbandverarbeitung und Sende- und Empfangseinheit eine große Gesamtlänge aller Datenleitungen, d.h. einen hohen Materialaufwand und entsprechend hohe Kosten. Beispielsweise kann sich die Basisbandverarbeitung im Erdgeschoss und die Sende- und Empfangseinheit auf dem Dach eines Hauses befinden. Für jeden Funkstandard muss dann eine mehrere Meter lange Datenleitung verlegt werden.

Die Erfindung hat daher die Aufgabe, eine Vorrichtung für eine Funkstation anzugeben, mit der Daten von wenigstens zwei unterschiedlichen Funkstandards von der jeweiligen Basisbandverarbeitung an wenigstens eine Sendeeinheit über eine einzige Datenleitung übermittelt werden können.

Diese Aufgabe wird durch die Vorrichtung sowie die Funkstation gemäß den unabhängigen Ansprüchen gelöst.

Vorteilhafte Ausgestaltungen und Weiterbildungen der Erfindung sind Gegenstand der abhängigen Ansprüche.

Eine erfindungsgemäße Vorrichtung für eine Funkstation ist ausgestattet mit einem ersten Multiplexer mit wenigstens zwei Eingängen zum Empfangen von Basisbanddaten und einem Ausgang zum Liefern von Basisbanddaten an eine Sendeeinheit, mit einer ersten Verarbeitungseinheit, die mit dem ersten Eingang des ersten Multiplexers verbunden ist, zum Liefern von ersten Basisbanddaten mit einer ersten Datenrate für eine Übertragung durch die Sendeeinheit nach einem ersten Funkstandard, und mit einer zweiten Verarbeitungseinheit, die mit dem zweiten Eingang des ersten Multiplexers verbunden ist, zum Liefern von zweiten Basisbanddaten mit der ersten Datenrate für eine Übertragung durch die Sendeeinheit nach einem zweiten Funkstandard.

Dadurch, dass die ersten und zweiten Basisbanddaten, d.h. Daten im Basisband des jeweiligen Funkstandards, mit einer gemeinsamen ersten Datenrate dem ersten Multiplexer zugeführt werden, können die ersten und zweiten Basisbanddaten gemeinsam über eine Verbindung, beispielsweise eine elektrische Leitung oder einen Lichtwellenleiter, an die Sendeeinheit übertragen und von dieser entsprechend dem jeweiligen Funkstandard einer Trägerfrequenz aufmoduliert werden. Vorzugsweise werden die ersten und zweiten Basisbanddaten auf unterschiedliche Trägerfrequenzen gemäß den Funkstandards aufmoduliert, obwohl die Trägerfrequenzen selbstverständlich auch übereinstimmen können.

Eine bevorzugte Ausgestaltung der Erfindung sieht vor, dass der erste Multiplexer zum Zusammenfügen der ersten und zweiten Basisbanddaten zu einem gemeinsamen Datenstrom auf Basis einzelner Bits ausgebildet ist. Dadurch wird ein besonders einfacher Aufbau des ersten Multiplexers ermöglicht, da nur ein Zähler benötigt wird, um die Basisbanddaten bitweise aneinanderzufügen. Weiterhin wird auch zum Trennen der Basisbanddaten in der Sendeeinheit nur ein Zähler benötigt.

Bei einer vorteilhaften Weiterbildung der Erfindung ist die zweite Verarbeitungseinheit zum Bilden der zweiten Basisbanddaten aus Datenblöcken und Fülldaten ausgebildet, wobei die Datenblöcke jeweils aus Steuerdaten und Nutzdaten gebildet werden.

Die Datenblöcke können auf diese Weise bereits so gebildet werden, dass sie möglichst ein Format aufweisen, aus dem Funkblöcke gebildet werden können, die gemäß dem zweiten Funkstandard zum Übertragen von Daten verwendet werden. In den Steuerdaten sind beispielsweise Angaben über eine zu verwendende Trägerfrequenz und über eine Sendeleistung enthalten. Die Fülldaten ermöglichen eine Anpassung der Datenrate der zweiten Basisbanddaten um die erste Datenrate zu erreichen, falls die Datenrate der Datenblöcke nicht ausreichend groß ist.

Vorteilhafterweise ist in jedem Datenblock diejenige Anzahl von Nutzdaten enthalten, die zum Bilden genau eines Funkblocks des zweiten Funkstandards erforderlich ist. Funkblöcke werden gemäß dem zweiten Funkstandard verwendet, um Daten von der Sendeeinheit zu einer Teilnehmerstation, beispielsweise einem Mobiltelefon, zu senden. Um einen Funkblock, der beispielsweise aus Schutzzeiten, so genannten Tailbits, Trainingssequenzen und den eigentlichen Informationsdaten (z.B.

Tondaten oder Videodaten) besteht, bilden, das heißt auf eine Trägerfrequenz aufmodulieren zu können, wird eine bestimmte Anzahl von Nutzdaten benötigt. Dabei werden üblicherweise mehr Bits an Nutzdaten zum Bilden eines Funkblocks benötigt, als nachfolgend im Funkblock übertragen werden.

In einer Weiterbildung der Erfindung sind die zweiten Basisbanddaten N unterschiedlichen Trägern des zweiten Funkstandards zugeordnet, wobei N der ganzzahlige Anteil des Quotienten von erster Datenrate und einer zweiten Datenrate ist, die zum Bilden von Funkblöcken eines Trägers gemäß dem zweiten Funkstandard mindestens benötigt wird. Verschiedene Träger des zweiten Funkstandards unterscheiden sich beispielsweise durch die Verwendung unterschiedlicher Trägerfrequenzen für die Funkübertragung und/oder durch die Verwendung unterschiedlicher Antennen, beispielsweise Sektorantennen, die Träger gleicher Frequenz in unterschiedliche Raumrichtungen aussenden können.

Vorteilhafterweise werden die Datenblöcke (Bij) und Fülldaten Fi0, Fi1, Fi2, Fi3, Fi4, Fi5, Fi6, Fi7) so gebildet, dass während einer Zeitdauer des kleinsten gemeinsames Vielfachen von Übertragungsrahmen, die gemäß dem ersten Funkstandard verwendet werden, und von Funkblöcke die gemäß dem zweiten Funkstandard verwendet werden, die gleiche Anzahl von Datenblöcken pro Träger geliefert wird wie Funkblöcke pro Träger übertragen werden.

Auf diese Weise kann erreicht werden, dass die für Datenübertragungen gemäß den beiden Funkstandards erforderlichen Basisbanddaten rahmensynchron an die Sende- und Empfangseinheit geliefert werden. Rahmensynchron bedeutet, dass immer nach Ablauf des kleinsten gemeinsamen Vielfachen von Übertragungsrahmen gemäß dem ersten Funkstandard und von Funkblöcken gemäß dem zweiten Funkstandard beide Funkstandards synchron mit einem neuen Rahmen beginnen. Als Rahmen werden dabei im ersten Funkstandard Übertragungsrahmen und im zweiten Funkstandard Funkblöcke bezeichnet. Das rahmensynchrone Liefern der ersten und zweiten Basisbanddaten ermöglicht eine besonders einfache Konstruktion der Vorrichtung und der Sendeeinheit.

In einer bevorzugten Weiterbildung der Erfindung ist eine Größe der Datenblöcke, aus denen die zweiten Basisbanddaten gebildet werden, nach der Formel

$$G = FLOOR(KGV*DR1/(N*ZFB))$$

festgelegt, mit

- FLOOR(X): ganzzahliger Anteil des Wertes X,
- KGV: kleinstes gemeinsames Vielfaches von Übertragungsrahmen gemäß dem ersten Funkstandard und von Funkblöcken gemäß dem zweiten Funkstandard,
- DR1: erste Datenrate in Bit/s oder in W Bit/s, wobei W der Größe eines Wortes im Basisband des zweiten Funkstandards entspricht,
- ZFB: die der Zeitdauer KGV entsprechende Anzahl von Funkblöcken gemäß dem zweiten Funkstandard und
- N: Zahl der unterschiedlichen Träger,

und die zum Erreichen der ersten Datenrate noch pro Zeiteinheit erforderliche Anzahl von Daten wird als Fülldaten zwischen wenigstens einige Datenblöcke eingefügt.

Durch die zwischen Datenblöcke eingefügten Fülldaten entstehen in der Sendeeinheit Verzögerungen beim Empfang von Datenblöcken, die Verzögerungen bei der anschließenden Übertragung von Funkblöcken nach sich ziehen. Um möglichst geringe Verzögerungen in der Sendeeinheit zu erreichen, ist es vorteilhaft, wenn die zweite Verarbeitungseinheit zum zeitlich äquidistanten bitweisen oder wortweisen Einfügen der Fülldaten zwischen den Datenblöcken ausgebildet ist.

Von Vorteil ist weiterhin, wenn die zweite Verarbeitungseinheit einen zweiten Multiplexer mit N Eingängen und einen Ausgang aufweist, wobei über jeden Eingang Datenblöcke und Fülldaten für jeweils eine der N Trägerfrequenzen empfangen werden, zum Erzeugen der zweiten Basisbanddaten durch bitweises oder wortweises Zusammenfügen der empfangenen Datenblöcke und Fülldaten.

In einer bevorzugten Ausgestaltung ist der erste Funkstandard der UMTS-FDD-Standard und der zweite Funkstandard der GSM-Standard.

Die erfindungsgemäße Funkstation weist eine Sendeeinheit und eine erfindungsgemäße Vorrichtung auf.

Die Erfindung wird im Folgenden anhand von in den Figuren dargestellten Ausführungsbeispielen näher erläutert.

Es zeigen:

Fig. 1 eine schematische Darstellung einer Funkstation mit einer Vorrichtung mit einem Multiplexer zum Liefern von ersten und zweiten Basisbanddaten an eine Sendeeinheit,

Fig. 2 eine schematische Darstellung einer zeitlichen Struktur von Übertragungsrahmen gemäß einem ersten Funkstandard und von Funkblöcken für sechs unterschiedliche Trägerfrequenzen eines zweiten Funkstandards,

Fig. 3 eine schematische Darstellung von zwei Funkblöcken des zweiten Funkstandards und einem Füllwort gemäß Fig. 2.

Gleiche Bezugszeichen in den Figuren bezeichnen gleiche Gegenstände.

Eine Funkstation ist beispielsweise eine Basisstation, ein Mobiltelefon oder auch eine ortsbewegliche oder ortsfeste Vorrichtung zur Übertragung von Bild- und/oder Tondaten, zum Fax-, Short-Message-Service SMS- und E-Mail-Versand und zum Internetzugang. Eine sendende Station ist ebenfalls eine Basisstation. Im Folgenden wird eine Funkstation als Basisstation bezeichnet, ohne jedoch darauf beschränkt zu sein.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere Mobilfunksysteme, beispielsweise nach dem GSM- (Global System for Mobile Communications) oder dem UMTS (Universal Mobile Telecommunications System) Standard. Auch zukünftige Mobilfunksysteme, beispielsweise der vierten Generation sollen unter Funkkommunikationssysteme verstanden werden.

Im Folgenden wird die Erfindung anhand zweier Mobilfunksysteme mit zwei unterschiedlichen Funkstandards nämlich dem UMTS-Standard und dem GSM-Standard beschrieben, ohne jedoch darauf beschränkt zu sein.

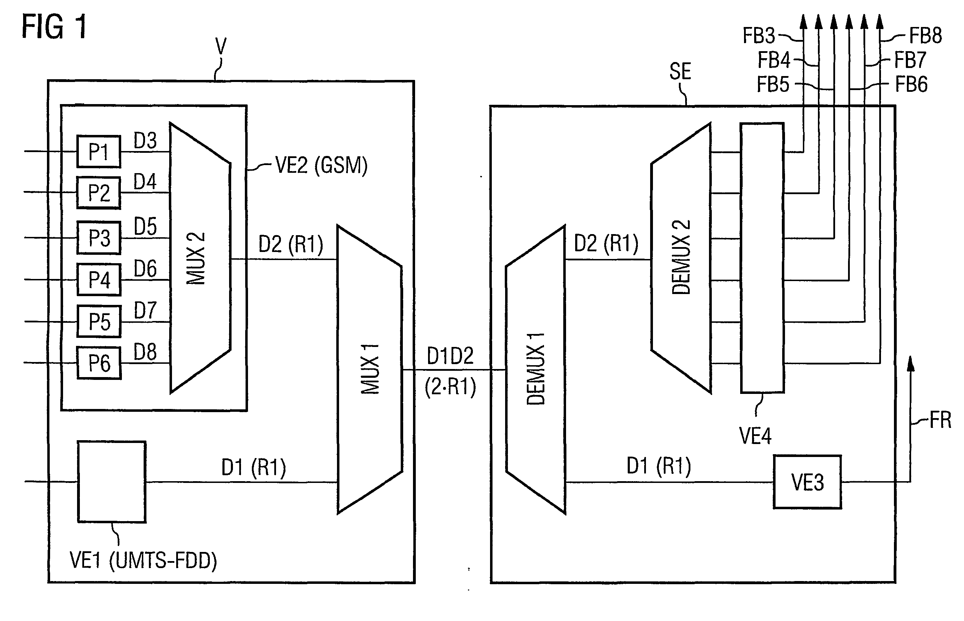

In Figur 1 sind schematisch Komponenten einer Basisstation dargestellt. In der Basisstation ist eine Vorrichtung V vorhanden, die über eine Leitung mit einer Sendeeinheit SE verbunden ist. In der Vorrichtung ist eine erste Verarbeitungseinheit VE1 angeordnet, die erste Basisbanddaten D1 mit einer ersten Datenrate R1 an einen ersten Eingang eines ersten Multiplexers MUX1 liefert. Die ersten Basisbanddaten D1 werden von der ersten Verarbeitungseinheit VE1 in einem in Übertragungsrahmen unterteilten Format des UMTS-FDD-Standards geliefert. Eine zweite Verarbeitungseinheit VE2 liefert zweite Basisbanddaten D2 mit ebenfalls der ersten Datenrate R1 an einen zweiten Eingang des ersten Multiplexers MUX1. Zur Erzeugung der zweiten Basisbanddaten D2 verfügt die zweite Verarbeitungseinheit VE2 über sechs Prozessoren P1, P2, P3, P4, P5, P6 sowie einen zweiten Multiplexer MUX2. Jeder der sechs Prozessoren P1, P2, P3, P4, P5, P6 ist mit einem von sechs Eingängen des zweiten Multiplexers MUX2 verbunden und liefert dem jeweiligen Eingang dritte, vierte, fünfte, sechste, siebte und achte Basisbanddaten D3, D4, D5, D6, D7, D8, die zur Übertragung auf jeweils einem Träger, d. h. mittels einer Trägerfrequenz und/oder mittels einer Antenne, gemäß dem zweiten Funkstandard vorgesehen sind.

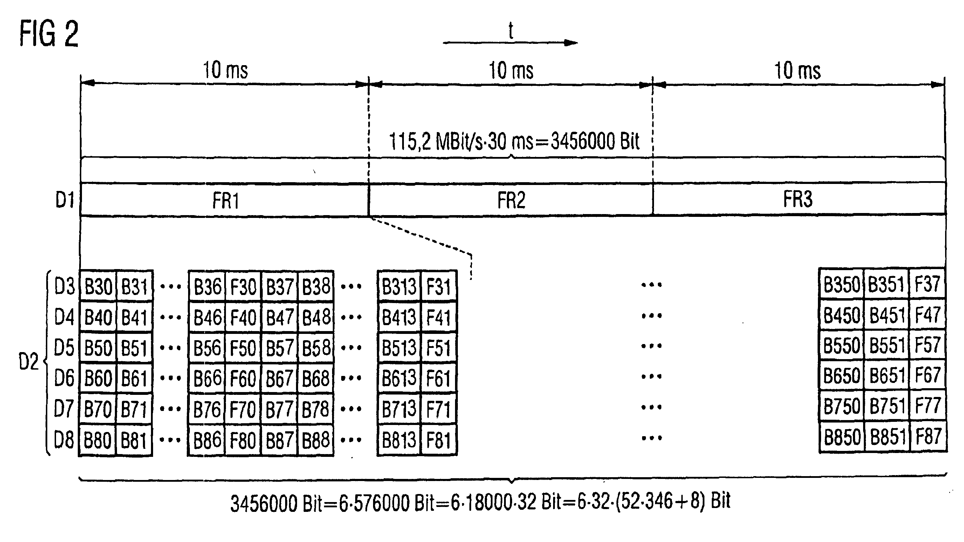

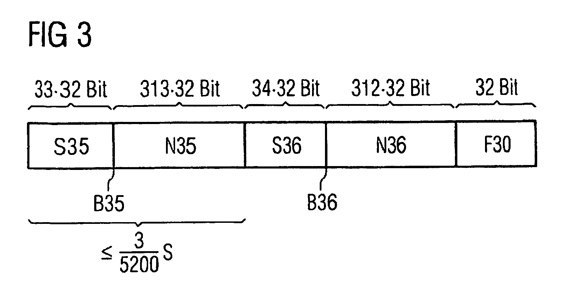

Die von den sechs Prozessoren P1, P2, P3, P4, P5, P6 gelieferten Basisbanddaten D3, D4, D5, D6, D7, D8 sind jeweils bereits in Datenblöcken gruppiert. Die Datenblöcke bestehen aus Signalisierungsdaten und Nutzdaten. Die Signalisierungsdaten geben beispielsweise an, mit welcher Frequenz und welcher Sendeleistung die aus den jeweiligen Nutzdaten eines Datenblocks in der Sendeeinheit SE gemäß dem GSM-Standard gebildeten Funkblöcke FB3, FB4, FB5, FB6, FB7, FB8 nachfolgend übertragen werden sollen. Zusätzlich zu Datenblöcken bestehen die an den sechs Eingängen des zweiten Multiplexers MUX2 anliegenden Basisbanddaten D3, D4, D5, D6, D7, D8 auch aus Fülldaten. Durch die Fülldaten wird erreicht, dass an jedem der sechs Eingänge des zweiten Multiplexers MUX2 1/6 der ersten Datenrate R1 anliegt. Der Aufbau der Datenblöcke, sowie die Anordnung der Fülldaten wird nachfolgend anhand der Figuren 2 und 3 beschrieben.

Am Ausgang des ersten Multiplexers MUX1 liegt ein bitweise aus den ersten Basisbanddaten D1 und den zweiten Basisbanddaten D2 zusammengefügter gemeinsamer Datenstrom D1D2 an und wird beispielsweise mit dem Doppelten der ersten Datenrate R1 an die Sendeeinheit SE übertragen. Die Verbindung zur Sendeeinheit SE kann selbstverständlich sowohl über eine elektrische Leitung als auch über einen Lichtwellenleiter erfolgen. In der Sendeeinheit SE ist ein erster Demultiplexer DEMUX1 vorhanden. Der erste Demultiplexer DEMUX1 trennt den empfangenen gemeinsamen Datenstrom D1D2 in die ersten Basisbanddaten D1 und die zweiten Basisbanddaten D2. Die ersten Basisbanddaten D1 werden nachfolgend von einer dritten Verarbeitungseinheit VE3 auf eine Trägerfrequenz aufmoduliert und in Übertragungsrahmen FR über eine Sendeantenne übertragen.

Der erste Demultiplexer DEMUX1 liefert die zweiten Basisbanddaten D2 an einen zweiten Demultiplexer DEMUX2, der die zweiten Basisbanddaten D2 wiederum in die dritten, vierten, fünften, sechsten, siebten und achten Basisbanddaten D3, D4, D5, D6, D7, D8 separiert, die ursprünglich den sechs Eingängen des zweiten Multiplexers MUX2 von den sechs Prozessoren P1, P2, P3, P4, P5, P6 zugeführt wurden. In einer vierten Verarbeitungseinheit VE4 werden anschließend aus den dritten, vierten, fünften, sechsten, siebten und achten Basisbanddaten D3, D4, D5, D6, D7, D8 die jeweiligen Fülldaten sowie die jeweiligen Signalisierungsdaten entfernt. Aus den Nutzdaten der Datenblöcke werden von der vierten Verarbeitungseinheit VE4 Funkblöcke FB3, FB4, FB5, FB6, FB7, FB8 für sechs Träger gemäß dem GSM-Standard gebildet, die dann jeweils mittels einer Antenne mit einer Trägerfrequenz übertragen werden. Alternativ können die sechs Träger mit einer beliebigen Anzahl von Antennen, beispielsweise einer Antenne, mit sechs unterschiedlichen Trägerfrequenzen übertragen werden. Bei mehreren Antennen können die für die sechs Träger verwendeten Trägerfrequenzen zumindest teilweise übereinstimmen.

In Figur 2 ist schematisch die Struktur der ersten Basisbanddaten D1 sowie der zweiten Basisbanddaten D2 dargestellt. Die ersten Basisbanddaten D1 sind nachfolgend für eine Übertragung auf einer Trägerfrequenz gemäß dem UMTS-FDD-Standard vorgesehen und sind daher in Übertragungsrahmen von jeweils 10 ms Länge angeordnet. Funkblöcke gemäß dem GSM-Standard haben eine Länge von 3/5200 Sekunden. Das kleinste gemeinsame Vielfache von Funkblöcken und Übertragungsrahmen hat somit den Wert KGV=30 ms. Während 30 ms werden gemäß dem UMTS-FDD-Standard drei Übertragungsrahmen FR1, FR2, FR3 übertragen. In der gleichen Zeit werden auf einem Träger gemäß dem GSM-Standard 52 Funkblöcke übertragen. Die ersten Basisbanddaten D1 werden mit der ersten Datenrate von 115,2 MBit/s übertragen, so dass in 30 ms 3456000 Bit übertragen werden. Für eine Übertragung von Funkblöcken auf einem Träger gemäß dem GSM-Standard wird eine zweite Datenrate für eine Übertragung von Datenblöcken, aus denen die Funkblöcke gebildet werden, von beispielsweise mindestens 18 MBit/s benötigt.

Einer zweiten Datenrate von genau 18 MBit/s je Träger im Basisband entspräche eine gemeinsame Datenrate für sechs Träger von 108 MBit/s, so dass 7 MBit/s fehlten, um die erste Datenrate von 115,2 MBit/s zu erreichen. Da 7 MBit/s kleiner ist als die Mindestübertragungsrate für einen Träger von 18 MBit/s, werden die zweiten Basisbanddaten D2 aus Datenblöcken Bij für sechs Träger gebildet. Dabei steht bei dem Bezugszeichen Bij das i als Index für die dritten, vierten, fünften, sechsten, siebten und achten Basisbanddaten D3, D4, D5, D6, D7, D8 und der Index j gibt die Nummer des jeweiligen Datenblocks während der Zeitdauer KGV=30 ms an. Für jeden Träger werden während 30 ms, d.h. während der Zeitdauer des kleinsten gemeinsamen Vielfachen KGV, 52 Datenblöcke gebildet, so dass die ersten Basisbanddaten D1 rahmensynchron mit den dritten, vierten, fünften, sechsten, siebten und achten Basisbanddaten D3, D4, D5, D6, D7, D8 sind. Alle 30 ms beginnt ein Datenblock jedes Trägers synchron mit einem Übertragungsrahmen der ersten Basisbanddaten D1.

Gemäß der Erfindung werden alle Datenblöcke, die für die sechs Träger vorgesehen sind, d.h. die Datenblöcke, die in den dritten, vierten, fünften, sechsten, siebten und achten Basisbanddaten D3, D4, D5, D6, D7, D8 enthalten sind, gleich groß gewählt. Die Größe jedes Datenblocks wird derart gewählt, dass die Datenrate der Datenblöcke für einen Träger größer ist als 18 MBit/s. Zwischen den Datenblöcken sind Fülldaten eingefügt, beispielsweise Bits mit dem Wert 0, die benötigt werden, um gleich große Datenblöcke verwenden zu können und um eine Gesamtdatenrate der Datenblöcke und Fülldaten von 115,2 MBit/s zu erreichen. Die Verwendung gleich großer Datenblöcke ermöglicht, dass die Sendeeinheit jeden Datenblock in gleicher Weise verarbeiten kann.

Für eine Funkübertragung gemäß dem UMTS-FDD-Standard werden im Basisband während 30 ms 3456000 Bit übertragen. Dies entspricht 108000 Worten à 32 Bit, so dass die gleich großen Datenblöcke Bij der für eine Funkübertragung gemäß dem GSM-Standard vorgesehenen dritten, vierten, fünften, sechsten, siebten und achten Basisbanddaten D3, D4, D5, D6, D7, D8 aus jeweils 346 Worten gebildet werden. Dies ergibt sich aus FLOOR ((30 ms * 3600000 Worte/s)/(6*52))=346 Worte, wobei die FLOOR Funktion den ganzzahligen Anteil ihres Argumentes ergibt. Für die Basisbanddaten jedes Trägers, d.h. für die dritten, vierten, fünften, sechsten, siebten und achten Basisbanddaten D3, D4, D5, D6, D7, D8, verbleiben während des Zeitraums des kleinsten gemeinsamen Vielfachen von 30 ms jeweils acht Worte, d. h. 8*32 Bit, die als Fülldaten Fi0, Fi1, ..., Fi7 zwischen Datenblöcke eingefügt werden, um mit allen sechs Basisbanddaten D3, D4, D5, D6, D7, D8 gemeinsam die erste Datenrate von 115,2 MBit/s zu erreichen. Die Fülldaten bzw. Füllworte Fi0, Fi1, ... Fi6 werden zeitlich äquidistant zwischen Datenblöcke Bij eingefügt, d.h. für jeden Träger werden die Fülldaten Fi0 Fi1, ..., Fi6 nach jedem siebten Datenblock Bi6, Bi13, ..., Bi48 eingefügt. Die Fülldaten Fi7 werden nach dem jeweils letzten Datenblock Bi51 eingefügt. Der Aufbau der aus 346 Worten bestehenden Datenblöcke Bij ist nachfolgend in Figur 3 beschrieben.

Selbstverständlich können die Datenblöcke Bij auch so festgelegt werden, dass sie eine gleiche Bitgröße aufweisen, d. h. die 3456000 Bit werden bitweise auf die 6*52 Datenblöcke Bij verteilt, und die verbleibenden Bits werden zeitlich äquidistant zwischen den Datenblöcken Bij eingefügt. Dies bedeutet bei möglichst gleicher Größe der Fülldaten, dass für jeden Träger zwischen den ersten 51 Datenblöcken jeweils sechs Bit als Fülldaten eingefügt werden und lediglich nach jedem 52ten Datenblock ein Bit als Füllbit eingefügt wird.

In Figur 3 sind schematisch der sechste und siebte Datenblock B35, B36 der dritten Basisbanddaten D3 sowie das erste Füllwort F30 dargestellt. Alle anderen Füllworte sowie die anderen Datenblöcke der dritten Basisbanddaten D3 und die Datenblöcke der vierten, fünften, sechsten, siebten und achten Basisbanddaten D4, D5, D6, D7, D8 sind in gleicher Weise aufgebaut. Der sechste Datenblock B35 besteht aus Steuerdaten S35 sowie Nutzdaten N35. Die Steuerdaten S35 haben eine Größe von 33 Worten, d.h. 33*32 Bit, Die Größe der Nutzdaten N35 beträgt 313 Worte, d.h. 313*32 Bit. Die Dauer des sechsten Datenblocks B36 sowie aller anderer Datenblöcke Bij ist etwas kleiner als die 3/5200 Sekunden eines über die Funkschnittstelle übertragenen Funkblocks gemäß dem GSM-Standard, da noch die Füllworte zwischen einigen der Datenblöcke Bij eingefügt sind.

Der siebte Datenblock B36 besteht ebenfalls aus Signalisierungsdaten S36 und Nutzdaten N36. Die Signalisierungsdaten S36 haben eine Größe von 34 Worten, d.h. 34*32 Bit und die Nutzdaten N36 haben eine Größe von 312 Worten, d.h. 312*32 Bit. Die Größe der Nutzdaten wechselt zwischen benachbarten Datenblöcken Bij und Bij+1 jeweils zwischen 313 und 312 Worten, so dass in der vierten Verarbeitungseinheit VE4 im Mittel 312,5 Worte vorliegen, die sie zum Bilden eines Funkblocks benötigt. In den Signalisierungsdaten Sij der Datenblöcke Bij sind, wie bereits zuvor erwähnt, die jeweiligen Frequenzen und Sendeleistungen, die nachfolgend für die gebildeten Funkblöcke zu verwenden sind angegeben. Die Nutzdaten Nij bestehen aus allen Daten, die zum Bilden eines Funkblocks benötigt werden, wie beispielsweise Datenbits und Trainingssequenzen.

Die anhand der Figuren 2 und 3 beschriebene Zusammenstellung der dritten, vierten, fünften, sechsten, siebten und achten Basisbanddaten D3, D4, D5, D6, D7, D8, ausgehend vom kleinsten gemeinsamen Vielfachen KGV=30ms von Übertragungsrahmen des UMTS-FDD-Standards und Funkblöcken des GSM-Standards, bewirkt insbesondere eine rahmensynchrone Übertragung beider Übertragungsstandards, d.h. alle 30 ms beginnt ein Übertragungsrahmen gleichseitig mit einem Funkblock, und ermöglicht somit einen einfachen Aufbau einer in Figur 1 schematisch dargestellten Multistandard-Basisstation.

Selbstverständlich kann die Erfindung auch mit einem ersten Multiplexer durchgeführt werden, der über mehr als zwei Eingänge verfügt. An jedem dieser Eingänge können Basisbanddaten für den ersten oder den zweiten Funkstandard anliegen.

Ein gleichzeitiger Empfang von Daten beider Funkstandards über die Funkschnittstelle und eine nachfolgende Verarbeitung der empfangenen Daten im Basisband des jeweiligen Funkstandards erfolgt selbstverständlich in umgekehrter Weise, wie dies für das Senden von Daten anhand der Figuren beschrieben wurde. Eine Empfangseinheit wird zu diesem Zweck aufgebaut wie die Sendeeinheit SE, wobei jedoch die Demultiplexer durch Multiplexer ersetzt werden. Eine Vorrichtung zum Weiterleiten der von der Empfangseinheit gelieferten Basisbanddaten wird aufgebaut wie die Vorrichtung V aus Figur 1, wobei jedoch die Multiplexer durch Demultiplexer ersetzt werden.

**Patentansprüche**

1.  Vorrichtung (V) für eine Funkstation,

    - mit einem ersten Multiplexer (MUX1) mit wenigstens zwei Eingängen zum Empfangen von Basisbanddaten (D1, D2) und einem Ausgang zum Liefern von Basisbanddaten (D1D2) an eine Sendeeinheit (SE),
    - mit einer ersten Verarbeitungseinheit (VE1), die mit dem ersten Eingang des ersten Multiplexers (MUX1) verbunden ist, zum Liefern von ersten Basisbanddaten (D1) mit einer ersten Datenrate (R1) für eine Übertragung durch die Sendeeinheit (SE) nach einem ersten Funkstandard,
    - und mit einer zweiten Verarbeitungseinheit (VE2), die mit dem zweiten Eingang des ersten Multiplexers (MUX1) verbunden ist, zum Liefern von zweiten Basisbanddaten (D2) mit der ersten Datenrate (R1) für eine Übertragung durch die Sendeeinheit (SE) nach einem zweiten Funkstandard.

2.  Vorrichtung nach Anspruch 1, bei der der erste Multiplexer (MUX1) zum Zusammenfügen der ersten und zweiten Basisbanddaten (D1, D2) zu einem gemeinsamen Datenstrom (D1D2) auf Basis einzelner Bits ausgebildet ist.

3.  Vorrichtung nach einem der vorstehenden Ansprüche, bei der die zweite Verarbeitungseinheit (VE2) zum Bilden der zweiten Basisbanddaten (D2) aus Datenblöcken (Bij) und Fülldaten (Fi0, Fi1, Fi2, Fi3, Fi4, Fi5, Fi6, Fi7) ausgebildet ist, wobei die Datenblöcke (Bij) jeweils aus Steuerdaten (Sij) und Nutzdaten (Nij) gebildet werden.

4.  Vorrichtung nach Anspruch 3, wobei in jedem Datenblock (Bij) diejenige Anzahl von Nutzdaten enthalten ist, die zum Bilden genau eines Funkblocks des zweiten Funkstandards erforderlich ist.

5.  Vorrichtung nach Anspruch 4, wobei die zweiten Basisbanddaten (D2) N unterschiedlichen Trägern des zweiten Funkstandards zugeordnet sind, wobei N der ganzzahlige Anteil des Quotienten von erster Datenrate (R1) und einer zweiten Datenrate ist, die zum Bilden von Funkblöcken eines Trägers gemäß dem zweiten Funkstandard mindestens benötigt wird.

6.  Vorrichtung nach Anspruch 4 oder 5, wobei die Datenblöcke (Bij) und Fülldaten Fi0, Fi1 Fi2, Fi3, Fi4, Fi5, Fi6, Fi7) so gebildet werden, dass während einer Zeitdauer des kleinsten gemeinsames Vielfachen von Übertragungsrahmen, die gemäß dem ersten Funkstandard verwendet werden, und von Funkblöcken die gemäß dem zweiten Funkstandard verwendet werden, die gleiche Anzahl von Datenblöcken pro Träger geliefert wird wie Funkblöcke übertragen werden.

7.  Vorrichtung nach einem der Ansprüche 5 oder 6, wobei

    - eine Größe der Datenblöcke (Bij), aus denen die zweiten Basisbanddaten (D2) gebildet werden, nach der Formel

$$G = FLOOR(KGV*DR1/(N*ZFB))$$

festgelegt ist, mit

> o FLOOR(X): ganzzahliger Anteil des Wertes X,
> o KGV: kleinstes gemeinsames Vielfaches von Übertragungsrahmen, die gemäß dem ersten Funkstandard verwendet werden, und von Funkblöcken gemäß dem zweiten Funkstandard,
> o DR1: erste Datenrate (R1) in Bit/s oder in W*Bit/s, wobei W der Größe eines Wortes im Basisband des zweiten Funkstandards entspricht,
> o ZFB: die der Zeitdauer KGV entsprechende Anzahl von Funkblöcken und
> o N: Zahl der unterschiedlichen Träger,

und

- die zum Erreichen der ersten Datenrate (R1) noch pro Zeiteinheit erforderliche Anzahl von Daten als Fülldaten (Fi0, Fi1, Fi2, Fi3, Fi4, Fi5, Fi6, Fi7) zwischen wenigstens einige Datenblöcke eingefügt wird.

8. Vorrichtung nach einem der Ansprüche 6 oder 7, wobei die Fülldaten (Fi0, Fi1, Fi2, Fi3, Fi4, Fi5, Fi6) zeitlich äquidistant bitweise oder wortweise zwischen den Datenblöcken eingefügt werden.

9. Vorrichtung nach einem der Ansprüche 6, 7 oder 8, wobei die zweite Verarbeitungseinheit (VE2) einen zweiten Multiplexer (MUX2) mit N Eingängen und einem Ausgang aufweist, wobei über jeden Eingang Datenblöcke und Fülldaten für jeweils einen der N Träger empfangen werden, zum Erzeugen der zweiten Basisbanddaten (D2) durch bitweises oder wortweises Zusammenfügen der empfangenen Datenblöcke und Fülldaten.

10. Vorrichtung nach einem der vorstehenden Ansprüche, wobei der erste Funkstandard der UMTS-FDD-Standard und der zweite Funkstandard der GSM-Standard ist.

11. Funkstation mit einer Sendeeinheit (SE) und mit einer Vorrichtung (V)

- mit einem ersten Multiplexer (MUX1) mit wenigstens zwei Eingängen zum Empfangen von Basisbanddaten (D1, D2) und einem Ausgang, zum Liefern von Basisbanddaten (D1D2) an die Sendeeinheit (SE),
- mit einer; ersten Verarbeitungseinheit (VE1), die mit dem ersten Eingang des ersten Multiplexers (MUX1) verbunden ist, zum Liefern von ersten Basisbanddaten (D1) mit einer ersten Datenrate (R1) für eine Übertragung durch die Sendeeinheit (SE) nach einem ersten Funkstandard,
- und mit einer zweiten Verarbeitungseinheit (VE2), die mit dem zweiten Eingang des ersten Multiplexers (MUX1) verbunden ist, zum Liefern von zweiten Basisbanddaten (D2) mit der ersten Datenrate (R1) für eine Übertragung durch die Sendeeinheit (SE) nach einem zweiten Funkstandard.

**Claims**

1. Device (V) for a radio station,

- having a first multiplexer (MUX1) with at least two inputs for receiving baseband data (D1, D2) and one output for supplying baseband data (D1D2) to a transmitting unit (SE),
- having a first processing unit (VE1), which is connected to the first input of the first multiplexer (MUX1), for supplying first baseband data (D1) at a first data rate (R1) for transmission by the transmitting unit (SE) according to a first radio standard,
- and having a second processing unit (VE2), which is connected to the second input of the first multiplexer (MUX1), for supplying second baseband data (D2) at the first data rate (R1) for transmission by the transmitting unit (SE) according to a second radio standard.

2. Device according to Claim 1, in which the first multiplexer (MUX1) is designed to combine the first and second baseband data (D1, D2) into a common data stream (D1D2) on the basis of individual bits.

3. Device according to one of the preceding claims, in which the second processing unit (VE2) is designed to form the second baseband data (D2) from data blocks (Bij) and filler data (Fi0, Fi1, Fi2, Fi3, Fi4, Fi5, Fi6, Fi7), the data blocks (Bij) being formed of control data (Sij) and payload data (Nij) in each case.

4. Device according to Claim 3, in which each data block (Bij) contains the number of payload data elements required to form exactly one radio block of the second radio standard.

5. Device according to Claim 4, in which the second baseband data (D2) are assigned to N different carriers of the second radio standard, where N is the integer portion of the quotient of the first data rate (R1) and a second data rate which is required as a minimum to form radio blocks of a carrier according to the second radio standard.

6. Device according to Claim 4 or 5, in which the data blocks (Bij) and filler data (Fi0, Fi1, Fi2, Fi3, Fi4, Fi5, Fi6, Fi7) are formed in such a way that during a period of the smallest common multiple of transmission frames used according to the first radio standard, and of radio blocks used according to the second radio standard, the same number of data blocks per carrier are supplied as radio blocks are transmitted.

7. Device according to one of Claims 5 or 6, in which

- a size of the data blocks (Bij) from which the second baseband data (D2) are formed is specified according to the formula

$$G = FLOOR(KGV*DR1/(N*ZFB))$$

where

  o FLOOR(X): integer portion of the value X,
  o KGV: smallest common multiple of transmission frames used according to the first radio standard and of radio blocks according to the second radio standard,
  o DR1: first data rate (R1) in bit/s or in W*bit/s, where W corresponds to the size of a word in the baseband of the second radio standard,
  o ZFB: the number of radio blocks which correspond to the period KGV, and
  o N: number of different carriers,

and
- the number of data elements still required per time unit in order to attain the first data rate (R1) are inserted as filler data (Fi0, Fi1, Fi2, Fi3, Fi4, Fi5, Fi6, Fi7) between at least some data blocks.

8. Device according to one of Claims 6 or 7, in which the filler data (Fi0, Fi1, Fi2, Fi3, Fi4, Fi5, Fi6) are inserted time-equidistantly between the data blocks bit-by-bit or word-by-word.

9. Device according to one of Claims 6, 7 or 8, in which the second processing unit (VE2) has a second multiplexer (MUX2) with N inputs and one output, with data blocks and filler data for one of the N carriers in each case being received via each input, in order to generate the second baseband data (D2) by combining the received data blocks and filler data bit-by-bit or word-by-word.

10. Device according to one of the preceding claims, in which the first radio standard is the UMTS FDD standard and the second radio standard is the GSM standard.

11. Radio station having a transmitting unit (SE) and having a device (V)

- having a first multiplexer (MUX1) with at least two inputs for receiving baseband data (D1, D2) and one output for supplying baseband data (D1D2) to the transmitting unit (SE),
- having a first processing unit (VE1), which is connected to the first input of the first multiplexer (MUX1), for supplying first baseband data (D1) at a first data rate (R1) for transmission by the transmitting unit (SE) according to a first radio standard,
- and having a second processing unit (VE2), which is connected to the second input of the first multiplexer (MUX1), for supplying second baseband data (D2) at the first data rate (R1) for transmission by the transmitting unit (SE) according to a second radio standard.

**Revendications**

1. Dispositif (V) pour une station radio, comprenant,

   - un premier multiplexeur (MUX1) avec au moins deux entrées pour la réception de données de bande de base (D1, D2) et une sortie pour la livraison de données de bande de base (D1D2) à une unité d'émission (SE),
   - une première unité de traitement (VE1), qui est reliée à la première entrée du premier multiplexeur (MUX1), pour la livraison de premières données de bande de base (D1) avec un premier débit de données (R1) pour une transmission par l'unité d'émission (SE) selon un premier standard radio,
   - et une seconde unité de traitement (VE2), qui est reliée à la seconde entrée du premier multiplexeur (MUX1), pour la livraison de secondes données de bande de base (D2) avec le premier débit de données (R1) pour une transmission par l'unité d'émission (SE) selon un second standard radio.

2. Dispositif selon la revendication 1, dans lequel le premier multiplexeur (MUX1) est conçu pour l'assemblage des premières et secondes données de bande de base (D1, D2) pour former un flux de données (D1D2) commun sur la base de bits individuels.

3. Dispositif selon l'une quelconque des revendications précédentes, dans lequel la seconde unité de traitement (VE2) est conçue pour former les secondes données de bande de base (D2) à partir de blocs de données (Bij) et de données de remplissage (Fi0, Fi1, Fi2, Fi3, Fi4, Fi5, Fi6, Fi7), les blocs de données (Bij) étant formés chacun de données de commande (Sij) et de données utiles (Nij).

4. Dispositif selon la revendication 3, le nombre de données utiles, qui est indispensable pour former exactement un bloc radio du second standard radio, étant indispensable dans chaque bloc de données (Bij).

5. Dispositif selon la revendication 4, les secondes données de bande de base (D2) étant attribuées à N porteurs différents du second standard radio, N étant la fraction entière du quotient du premier débit de données (R1) et d'un second débit de données, qui est utilisée pour la formation de blocs radio d'un porteur selon le second standard radio.

6. Dispositif selon la revendication 4 ou 5, les blocs de données (Bij) et les données de remplissage (Fi0, Fi1, Fi2, Fi3, Fi4, Fi5, Fi6, Fi7) étant formés de telle sorte que, pendant une durée du plus petit multiple commun de trames de transmission, qui sont utilisées selon le premier standard radio, et de blocs radios qui sont utilisés selon le second standard radio, le même nombre de blocs radio par porteur que le nombre de blocs radio transmis est fourni.

7. Dispositif selon l'une quelconque des revendications 5 ou 6,

   - une grandeur des blocs de données (Bij), à partir desquels les secondes données de bande de base (D2) sont formées, est définie selon la formule suivante :

$$G = FLOOR(KGV*DR1/(N*ZFB)),$$

   avec,

     o FLOOR(X) : fraction entière de la valeur X ;
     o KGV : plus petit commun multiple de trames de transmission qui sont utilisées selon le premier standard radio, et de blocs radio selon le second standard radio,
     o DR1 : premier débit de données (R1) en bits/s ou en W*bits/s, W correspondant à la grandeur d'un mot dans la bande de base du second standard radio,
     o ZFB : le nombre, correspondant à la durée KGV, de blocs radio, et
     o N: nombre des porteurs différents,

   et
   - le nombre de données encore nécessaire pour atteindre le premier débit de données (R1) par unité de temps comme données de remplissage (Fi0, Fi1, Fi2, Fi3, Fi4, Fi5, Fi6, Fi7) est inséré entre au moins quelques blocs de données.

**8.** Dispositif selon l'une quelconque des revendications 6 ou 7,
les données de remplissage (Fi0, Fi1, Fi2, Fi3, Fi4, Fi5, Fi6) étant insérées de façon équidistante dans le temps, bit par bit ou mot par mot, entre les blocs de données.

**9.** Dispositif selon l'une quelconque des revendications 6, 7 ou 8, la seconde unité de traitement (VE2) présentant un second multiplexeur (MUX2) avec N entrées et une sortie, des blocs de données et des données de remplissage étant reçus par chaque entrée pour respectivement l'un des N porteurs, pour générer les secondes données de bande de base (D2) par un assemblage bit par bit ou mot par mot des blocs de données et données de remplissage reçus.

**10.** Dispositif selon l'une quelconque des revendications précédentes, le premier standard radio étant le standard UMTS-FDD et le second standard radio le standard GSM.

**11.** Station radio comprenant une unité d'émission (SE) et un dispositif (V),

- un premier multiplexeur (MUX1) avec au moins deux entrées pour la réception de données de bande de base (D1, D2) et une sortie, pour la livraison de données de bande de base (D1D2) à l'unité d'émission (SE),
- une première unité de traitement (VE1), qui est reliée à la première entrée du premier multiplexeur (MUX1), pour la livraison de premières données de bande de base (D1) avec un premier débit de données (R1) pour une transmission par l'unité d'émission (SE) selon un premier standard radio,
- et une seconde unité de traitement (VE2), qui est reliée à la seconde entrée du premier multiplexeur (MUX1), pour la livraison de secondes données de bande de base (D2) avec le premier débit de données (R1) pour une transmission par l'unité d'émission (SE) selon un second standard radio.

# FIG 1

V

P1 — D3
P2 — D4
P3 — D5
P4 — D6
P5 — D7
P6 — D8

MUX 2

VE2 (GSM)

D2 (R1)

MUX 1

VE1 (UMTS-FDD)

D1 (R1)

D1D2
(2·R1)

DEMUX 1

D2 (R1)

DEMUX 2

VE4

D1 (R1)

VE3

FR

SE

FB3 → ← FB8
FB4 → ← FB7
FB5 → ← FB6

EP 1 665 547 B1

# FIG 2

t →

| 10 ms | 10 ms | 10 ms |

115,2 MBit/s·30 ms=3456000 Bit

| D1 | FR1 | FR2 | FR3 |

D2 {

| | | | | | | | | | | | | | | | | | |
|---|---|---|---|---|---|---|---|---|---|---|---|---|---|---|---|---|---|
| D3 | B30 | B31 | ··· | B36 | F30 | B37 | B38 | ··· | B313 | F31 | | ··· | | | B350 | B351 | F37 |
| D4 | B40 | B41 | ··· | B46 | F40 | B47 | B48 | ··· | B413 | F41 | | ··· | | | B450 | B451 | F47 |
| D5 | B50 | B51 | ··· | B56 | F50 | B57 | B58 | ··· | B513 | F51 | | ··· | | | B550 | B551 | F57 |
| D6 | B60 | B61 | ··· | B66 | F60 | B67 | B68 | ··· | B613 | F61 | | ··· | | | B650 | B651 | F67 |
| D7 | B70 | B71 | ··· | B76 | F70 | B77 | B78 | ··· | B713 | F71 | | ··· | | | B750 | B751 | F77 |
| D8 | B80 | B81 | ··· | B86 | F80 | B87 | B88 | ··· | B813 | F81 | | ··· | | | B850 | B851 | F87 |

3456000 Bit=6·576000 Bit=6·18000·32 Bit=6·32·(52·346+8) Bit

# FIG 3

| 33·32 Bit | 313·32 Bit | 34·32 Bit | 312·32 Bit | 32 Bit |
|:---:|:---:|:---:|:---:|:---:|
| S35 | N35 | S36 | N36 | F30 |

B35

B36

$$\leq \frac{3}{5200} S$$